# EUROPEAN PATENT SPECIFICATION

(11) **EP 2 961 971 B1**
(45) Date of publication and mention of the grant of the patent: **22.05.2019**
(21) Application number: 14756466.0
(22) Date of filing: 26.02.2014
(51) Int. Cl.: F02C 9/18, F02C 9/16, F04D 27/02

(54) **GAS TURBINE ENGINE ANTI-SURGE VALVE DISCHARGE TUBE**
DRUCKSTOSSSCHUTZVENTILENTLADUNGSRÖHRE FÜR GASTURBINENMOTOR
TUBE D'ÉVACUATION DE SOUPAPE ANTI-SURPRESSION DE MOTEUR DE TURBINE À GAZ

(30) Priority: 01.03.2013 US 201361771116 P
(43) Date of publication of application: 06.01.2016
(73) Proprietor: United Technologies Corporation, Farmington, CT 06032 (US)
(72) Inventor: NAPIER, James C., San Diego, California 92124 (US); FRANCISCO, Jay M., Chula Vista, California 91911 (US)
(74) Representative: Dehns
(86) International application number: PCT/US2014/018609
(87) International publication number: WO 2014/134134

(56) References cited:
- WO-A1-2006/090152
- GB-A- 2 132 269
- GB-A- 2 405 666
- US-A- 4 979 587
- US-A- 5 097 656
- US-A- 5 097 656
- US-A1- 2008 179 132
- US-A1- 2010 221 115
- US-A1- 2010 313 573
- US-A1- 2012 183 385
- US-A1- 2012 216 887
- US-B1- 7 028 485

## Description

### BACKGROUND

This application relates to a method of reducing the noise associated with discharging air from an anti-surge valve associated with a gas turbine engine.

Gas turbine engines are known and, typically, include a compressor compressing air and delivering the air into a combustion section. The air is mixed with fuel and ignited, and products of this combustion pass downstream over turbine rotors driving them to rotate. The turbine rotors, in turn, drive a compressor rotor.

One type of gas turbine engine is an auxiliary power unit ("APU"). The APU is typically utilized on an aircraft to provide power before the main engines are started, and further to assist in starting the main engines. An APU is typically provided with a gear box also driven by the turbine rotors, and which drive an electrical generator.

Under certain conditions, the pressure downstream of the compressor rotor may become unduly high. As an example, when the APU is first starting a main gas turbine engine on an aircraft, the loads on the APU are very high. The compressor may be delivering very high pressures and this can lead to a condition called "surge." This is undesirable and can lead to damage.

Thus, an anti-surge valve is typically included downstream of the compressor and upstream of the combustor. The anti-surge valve is selectively opened when a control determines that surge is a possibility. The anti-surge valve in the prior art taps air downstream of the compressor into an exhaust for the APU.

A problem with simply delivering the anti-surge air into the exhaust is that the air generates noise over a very broad band, and at frequencies within the range of human hearing. As an example, broadband noise between 500 and 8,000 hertz is not atypical for APUs.

Since the APUs are particularly utilized when associated aircraft is on the ground, this is undesirable.

US 2008/179132 A1 relates to acoustic apparatus utilized in gas turbine engines. GB 2132269 A relates to the silencing of high velocity gas flows. GB2405666 A relates to an attenuator arrangement for reducing noise due to release of pressurized fluid through an opening. US 5097656 relates to an apparatus for reducing turbine engine exhaust noise. US 2010/221115 A1 relates to turbine engines, and more particularly to structures for use in retaining turbines of turbine engines.

### SUMMARY

In a featured embodiment according to claim 1, a gas turbine engine has a compressor including an anti-surge system. The anti-surge system includes a duct for tapping compressed air downstream of a compressor rotor and delivering that air into an exhaust flow. The anti-surge system further includes a selectively open valve for allowing the tapped air to flow from the location downstream of the compressor rotor into the exhaust flow. The tapped air moves into the exhaust flow through a plurality of holes. The holes are sized equal to or less than about .1 inch (.254 centimeters) in hydraulic diameter to tune a frequency of sound created by the tapped air outside of normal human hearing. The holes are in a piccolo tube that include a plurality of axially spaced holes, and the piccolo tube extends into the exhaust flow.

In another embodiment according to any of the previous embodiments, the gas turbine engine is an auxiliary power unit.

In another embodiment according to any of the previous embodiments, the piccolo tube extends into a silencer.

In another embodiment according to any of the previous embodiments, the piccolo tube extends into an acoustic chamber positioned radially outwardly of a main exhaust flow chamber in the silencer downstream of an exhaust duct.

In another embodiment according to any of the previous embodiments, a turbine catcher is positioned in an exhaust duct. The holes are formed within the turbine catcher.

In another embodiment according to any of the previous embodiments, the turbine catcher includes at least three extending arms. The holes are formed in each of the at least three arms.

These and other features may be best understood from the following drawings and specification.

### BRIEF DESCRIPTION OF THE DRAWINGS

Figure 1 schematically shows a first embodiment of this invention.
Figure 2 shows a second embodiment.
Figure 3A shows a first view of a third embodiment.
Figure 3B shows a second view of a third embodiment.

### DETAILED DESCRIPTION

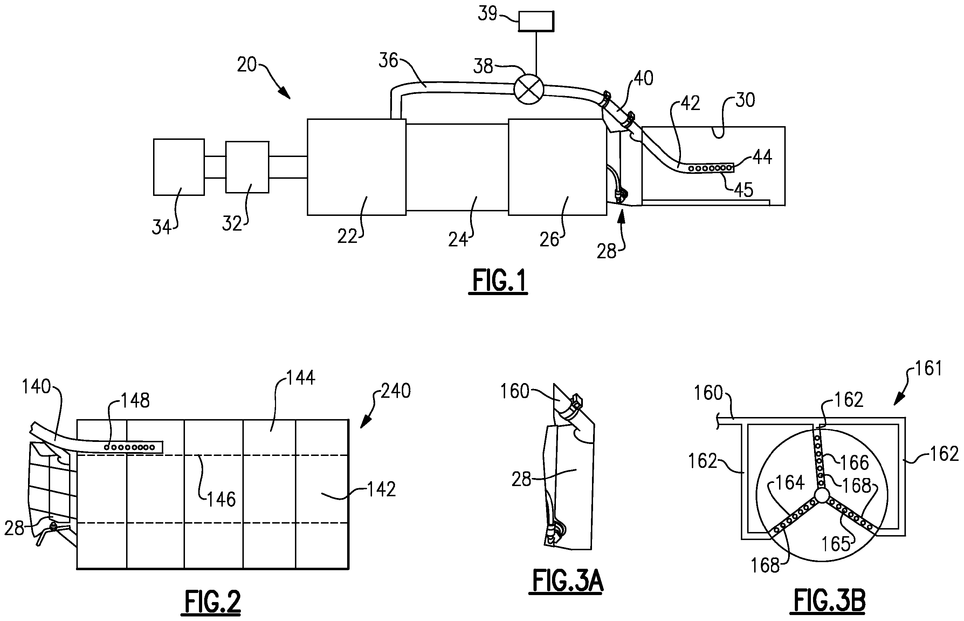

Figure 1 shows an APU 20 having a compressor rotor 22 delivering compressed air into a combustion section 24. The air is mixed with fuel and ignited, and products of this combustion pass downstream over a turbine rotor 26 driving the turbine rotor 26 to rotate. The turbine rotor 26, in turn, drives the compressor rotor 22 and an electrical generator 34 through a gearbox 32. The features mentioned to this point are all schematically shown and all well known in this art.

Downstream of the turbine rotor 26, the products of combustion pass into an exhaust duct 28, and then through a silencer 30.

As mentioned above, an anti-surge valve 38 is associated with a tube 36 to tap air downstream of a compressor rotor 22 and upstream of the combustion section 24. A control 39 receives operational information, and when it determines that a surge condition is possible, it will open the anti-surge valve 38 and bypass air downstream of the compressor rotor 22 to a duct portion 40. One example may be when an aircraft associate with APU 20 is at altitude, for example above 10,000 feet (3,048 meters). Under these conditions, anti-surge valve 38 may be opened. Of course, a worker of ordinary skill would appreciate other appropriate times for such control.

A piccolo tube 42 receives the anti-surge air and passes the air into the outlet flow 45 through a plurality of spaced holes 44. The spaced holes 44 are all relatively small. The holes are equal to or less than about .1 inch (.254 centimeters) and in one embodiment may be on the order of .063 inch (0.160 centimeter). The holes need not be cylindrical, and these sizes may also be true of a hydraulic diameter of other shaped holes. By utilizing such small holes, the frequency of the noise created by the discharge moves outside of the range of human hearing. As an example, with the .063 inch (0.160 centimeter) holes, the noise may be on the order of 150 kilohertz.

Thus, by utilizing a piccolo tube and, in particular, by discharging the air through a plurality of small holes, the noise associated with the operation of the anti-surge valve moves outside of the range of human hearing.

Figure 2 shows a second embodiment wherein the tube 140 delivers the anti-surge air through a plurality of holes 148 in a piccolo tube, as described in the first embodiment. However, the holes 148 and the piccolo tube 140 are placed in an outer acoustic chamber 144 of the silencer 240. The main exhaust flow flows through a main flow chamber 142 downstream of the exhaust duct 28. From the main flow chamber 142, the air may flow through perforations 146 into the outer acoustic chamber 144. The air can move between the outer acoustic chamber 144 and main flow chamber 142 and eventually exits the silencer through the main flow chamber 142. The size of the holes 148 is selected to move the noise outside of the normal range of human hearing.

Figure 3A shows another embodiment, wherein the tube 160 is connected into the exhaust duct 28. As shown in Figure 3B, the tube 160 communicates with a plurality of supply ducts 162, each of which are connected into a leg 164, 165 and 163 of a so-called "turbine catcher." A turbine catcher 161 is a device placed at a downstream end of an exhaust duct 28. The turbine catcher 161 is typically placed in the duct 28 to catch the turbine in the unlikely event that it become separated from the engine rotor shaft.

The turbine catcher 161 includes relatively small holes 168 in tubes to discharge the anti-surge air. The size of the holes is selected to move the noise created outside the range of human hearing.

In general, all of the embodiments include holes 44/148/168, which are sized to tune a frequency of a sound created by the trapped air to a frequency range outside of normal human hearing.

Although embodiments of this invention has been disclosed, a worker of ordinary skill in this art would recognize that certain modifications would come within the scope of this invention. For that reason, the following claims should be studied to determine the true scope and content of this invention.

## Claims

1. A gas turbine engine comprising:
a compressor including an anti-surge system, the anti-surge system including a duct for tapping compressed air downstream of a compressor rotor (22) and delivering that air into an exhaust flow, the anti-surge system further including a selectively open valve (38) for allowing the tapped air to flow from the location downstream of the compressor rotor into the exhaust flow, and the tapped air moving into the exhaust flow through a plurality of holes (44),
**characterized in that**
the holes are sized equal to or less than about .1 inch (.254 centimeters) in hydraulic diameter to tune a frequency of a sound created by the tapped air outside of normal human hearing;
wherein the holes are in a piccolo tube (140) including a plurality of axially spaced ones of said holes, and wherein said piccolo tube extends into the exhaust flow.

2. The gas turbine engine as set forth in claim 1, wherein said gas turbine engine is an auxiliary power unit.

3. The gas turbine engine as set forth in claim 1, wherein said piccolo tube extends into a silencer (240), and preferably wherein said piccolo tube (140) extends into an acoustic chamber positioned radially outwardly of a main exhaust flow chamber in the silencer downstream of an exhaust duct.

4. The gas turbine engine as set forth in claims 1-3, wherein a turbine catcher is positioned in an exhaust duct, and said holes are formed within said turbine catcher.

5. The gas turbine engine as set forth in claims 1-4, wherein said turbine catcher includes at least three extending arms, with said holes being formed in each of said at least three arms.

## Patentansprüche

1. Gasturbinenmotor, umfassend:
einen Kompressor, der ein Druckstoßschutzsystem beinhaltet, wobei das Druckstoßschutzsystem einen Kanal beinhaltet, um komprimierte Luft stromabwärts eines Kompressorrotors (22) anzuzapfen und diese Luft in eine Abgasströmung abzugeben, wobei das Druckstoßschutzsystem ferner ein selektiv offenes Ventil (38) beinhaltet, um zu ermöglichen, dass die angezapfte Luft von der Stelle stromabwärts des Kompressorrotors in die Abgasströmung strömt und wobei sich die angezapfte Luft durch eine Vielzahl von Löchern (44) in die Abgasströmung bewegt,
**dadurch gekennzeichnet, dass**
die Löcher gleich oder weniger als ungefähr 0,1 Zoll (0,254 Zentimeter) in hydraulischem Durchmesser größenbemessen sind, um eine Frequenz eines Tons, der durch die angezapfte Luft erzeugt wird, außerhalb des normalen menschlichen Gehörs einzustellen;
wobei sich die Löcher in einer Piccolo-Röhre (140) befinden, die eine Vielzahl von axial beabstandeten der Löcher enthält, und
wobei sich die Piccolo-Röhre in die Abgasströmung erstreckt.

2. Gasturbinenmotor nach Anspruch 1, wobei der Gasturbinenmotor eine Hilfskrafteinheit ist.

3. Gasturbinenmotor nach Anspruch 1, wobei sich die Piccolo-Röhre in einen Geräuschdämpfer (240) erstreckt und wobei sich die Piccolo-Röhre (140) vorzugsweise in eine akustische Kammer erstreckt, die radial außerhalb einer Hauptabgasströmungskammer in dem Geräuschdämpfer stromabwärts eines Abgaskanals positioniert ist.

4. Gasturbinenmotor nach Anspruch 1-3, wobei ein Turbinenfänger in einem Abgaskanal positioniert ist und die Löcher innerhalb des Turbinenfängers gebildet sind.

5. Gasturbinenmotor nach Anspruch 1-4, wobei der Turbinenfänger zumindest drei sich erstreckende Arme beinhaltet, wobei die Löcher in jedem der zumindest drei Arme gebildet sind.

## Revendications

1. Moteur à turbine à gaz comprenant :
un compresseur incluant un système anti-surpression, le système anti-surpression incluant un conduit pour prélever de l'air comprimé en aval d'un rotor de compresseur (22) et distribuer cet air dans un écoulement d'échappement, le système anti-surpression incluant en outre une soupape sélectivement ouverte (38) pour permettre à l'air prélevé de s'écouler depuis l'emplacement en aval du rotor de compresseur dans l'écoulement d'échappement, et l'air prélevé se déplaçant dans l'écoulement d'échappement par une pluralité de trous (44),
**caractérisé en ce que** la taille des trous est égale ou inférieure à environ 0,1 pouce (0,254 centimètres) en diamètre hydraulique pour accorder une fréquence d'un son créé par l'air prélevé en dehors de la capacité auditive humaine normale ;
dans lequel les trous sont dans un tube piccolo (140) incluant une pluralité de trous axialement espacés desdits trous, et dans lequel ledit tube piccolo s'étend dans l'écoulement d'échappement.

2. Moteur à turbine à gaz selon la revendication 1, dans lequel ledit moteur à turbine à gaz est une unité d'alimentation auxiliaire.

3. Moteur à turbine à gaz selon la revendication 1, dans lequel ledit tube piccolo s'étend dans un silencieux (240), et de préférence dans lequel ledit tube piccolo (140) s'étend dans une chambre acoustique positionnée radialement vers l'extérieur d'une chambre d'écoulement d'échappement principale dans le silencieux en aval d'un conduit d'échappement.

4. Moteur à turbine à gaz selon les revendications 1-3, dans lequel un receveur de turbine est positionné dans un conduit d'échappement, et lesdits trous sont formés dans ledit receveur de turbine.

5. Moteur à turbine à gaz selon les revendications 1-4, dans lequel ledit receveur de turbine inclut au moins trois bras d'extension, avec lesdits trous étant formés dans chacun desdits au moins trois bras.
